# EUROPEAN PATENT APPLICATION

(11) **EP 3 960 560 A1**
(43) Date of publication of application: **02.03.2022**
(21) Application number: 21762329.7
(22) Date of filing: 19.05.2021
(51) Int. Cl.: B60W 30/06, B60W 50/08, B60W 50/14, G06F 3/0484

(54) **PARKING INTERACTION METHOD AND APPARATUS**

(30) Priority: 29.06.2020 CN 202010607007
(71) Applicant: Guangzhou Chengxing Zhidong Motors Technology Co., Ltd., Guangzhou, Guangdong 510700 (CN); Guangzhou Xiaopeng Motors Technology Co., Ltd., Tianhe District Guangzhou Guangdong (CN)
(72) Inventor: DAI, Guanqi, Guangzhou, Guangdong 510000 (CN); RAO, Heng, Guangzhou, Guangdong 510000 (CN); HU, Zhimiao, Guangzhou, Guangdong 510000 (CN); CHEN, Zhilong, Guangzhou, Guangdong 510000 (CN); YAN, Zhenjie, Guangzhou, Guangdong 510000 (CN)
(74) Representative: Habermann, Hruschka & Schnabel
(86) International application number: PCT/CN2021/094584
(87) International publication number: WO 2022/001448

(57) **Abstract**

Embodiments of the present disclosure provide a parking interaction method and apparatus, which are applied in an in-vehicle terminal. The method includes: determining, in response to a parking space selection operation, a target parking space in a parking interface; displaying a floating graphical interface element in a display region corresponding to the target parking space; adjusting, in response to an adjustment operation for the floating graphical interface element, the floating graphical interface element by using a predetermined animation effect mode; and stopping, when a predetermined stop condition is satisfied, adjusting the floating graphical interface element by using the predetermined animation effect mode. According to the embodiments of the present disclosure, by setting an adjustment process of the floating graphical interface element, feedback on selections of the parking space is given to a user, such that on the one hand, the user can clearly understand a role of such a function, and an expectation of the user on the function can be changed, thereby establishing a new user habit; and on the other hand, through the adjustment of the floating graphical interface element, a human-computer interaction is achieved, thereby increasing the fun during a parking space selection.

## Description

The present application claims a priority to Chinese Patent Application No. 202010607007.5, titled "PARKING INTERACTION METHOD AND APPARATUS", and filed on June 29, 2020, the entire disclosure of which are incorporated herein by reference.

### TECHNICAL FIELD

The present disclosure relates to the field of vehicle interaction technologies, and more particularly, to a parking interaction method and a parking interaction apparatus.

### BACKGROUND

With the continuous development of artificial intelligence and Internet of vehicles technology, the future vehicle development will move in a direction of longer, deeper, and more frequent human-computer interactions. The manner of human-computer interaction in vehicles is on the eve of change. The vehicle has gradually developed into a terminal for users in their lives. Based on the full integration of vehicle functions and Internet content, and through a manner of natural interaction with the users, the users are provided with very intelligent, personalized and emotional services for vehicle use experience in a number of scenarios.

Automatic parking is a product of the development of artificial intelligence and Internet of vehicles technology. Automatic parking may measure the distance and angle between the vehicle body and the surrounding environment through sensors mounted around the vehicle, collect sensor data to calculate an operation process, and achieve docking through adjusting the rotation of the steering wheel. In short, an automatic parking system completes automatic parking through three steps, i.e., parking space detection, route planning, and parking execution.

Through research, it is found that during parking, when a user clicks to select a parking space, an expected effect is to start parking. However, if parking starts immediately upon clicking, there is a great safety hazard, and misuse of the user is likely to be generated. Such a design is generally not adopted when an automatic parking function is designed, which results in a parking system not giving corresponding feedback after the user chooses the parking space. The user may be confused by the functional utility of this operation, resulting in a reduced user experience.

### SUMMARY

In view of the above problems, embodiments of the present disclosure are proposed to provide a parking interaction method and a corresponding parking interaction apparatus, capable of overcoming the above problems or at least partially solving the above problems.

To solve the above problems, an embodiment of the present disclosure discloses a parking interaction method. The method is applied in an in-vehicle terminal. The method includes: determining, in response to a parking space selection operation, a target parking space in a parking interface; displaying a floating graphical interface element in a display region corresponding to the target parking space; adjusting, in response to an adjustment operation for the floating graphical interface element, the floating graphical interface element by using a predetermined animation effect mode; and stopping, when a predetermined stop condition is satisfied, said adjusting the floating graphical interface element by using the predetermined animation effect mode.

Optionally, said adjusting, in response to the adjustment operation for the floating graphical interface element, the floating graphical interface element by using the predetermined animation effect mode includes adjusting, in response to a plurality of adjustment operations triggered continuously for the floating graphical interface element, the floating graphical interface element by using a plurality of animation effect modes sequentially. Each of the plurality of adjustment operations triggered continuously corresponds to a single animation effect mode. The plurality of animation effect modes forms a continuous animation effect with a unique changing trend.

Optionally, said adjusting, in response to the plurality of adjustment operations triggered continuously for the floating graphical interface element, the floating graphical interface element by using the plurality of animation effect modes sequentially includes: playing, in response to the adjustment operation for the floating graphical interface element, the floating graphical interface element in accordance with an animation effect mode corresponding to the adjustment operation to adjust the floating graphical interface element, and displaying the adjusted floating graphical interface element; playing, in response to a next adjustment operation for the floating graphical interface element, the floating graphical interface element in accordance with an animation effect mode corresponding to the next adjustment operation for predetermined time after the floating graphical interface element is played in accordance with the animation effect mode corresponding to the adjustment operation to adjust the floating graphical interface element, and displaying the adjusted floating graphical interface element; and repeating said playing, in response to the next adjustment operation for the floating graphical interface element, the floating graphical interface element in accordance with the animation effect mode corresponding to the next adjustment operation for the predetermined time after the floating graphical interface element is played in accordance with the animation effect mode corresponding to the adjustment operation to adjust the floating graphical interface element, and said displaying the adjusted floating graphical interface element, until a number of adjustments for the floating graphical interface element reaches a predetermined number.

Optionally, said adjusting, in response to the plurality of adjustment operations triggered continuously for the floating graphical interface element, the floating graphical interface element by using the plurality of animation effect modes sequentially further includes rewinding, in response to receiving no next adjustment operation for the floating graphical interface element for the predetermined time after the floating graphical interface element is played in accordance with the animation effect mode corresponding to the adjustment operation, a current floating graphical interface element in accordance with the animation effect mode played previously, until the floating graphical interface element is restored to an initial mode.

Optionally, said adjusting, in response to the plurality of adjustment operations triggered continuously for the floating graphical interface element, the floating graphical interface element by using the plurality of animation effect modes sequentially further includes, when the adjustment operation for the floating graphical interface element is received during the rewinding of the current floating graphical interface element in accordance with the animation effect mode played previously, playing, after the floating graphical interface element is restored to the initial mode, the floating graphical interface element in accordance with an animation effect mode corresponding to the adjustment operation in response to the adjustment operation for the floating graphical interface element, to adjust the floating graphical interface element, and displaying the adjusted floating graphical interface element.

Optionally, said adjusting, in response to the plurality of adjustment operations triggered continuously for the floating graphical interface element, the floating graphical interface element by using the plurality of animation effect modes sequentially further includes playing, in response to the number of adjustments for the floating graphical interface element reaching the predetermined number, the floating graphical interface element in an animation effect mode that causes the floating graphical interface element to disappear, and displaying a new floating graphical interface element after completing playing of the animation effect mode that causes the floating graphical interface element to disappear.

Optionally, the predetermined stop condition includes a vehicle resuming driving or a user changing the target parking space. Said stopping, when the predetermined stop condition is satisfied, adjusting the floating graphical interface element by using the predetermined animation effect mode includes stopping, when the vehicle resumes driving or the user changes the target parking space, adjusting the floating graphical interface element by using the predetermined animation effect mode.

An embodiment of the present disclosure further discloses a parking interaction apparatus. The apparatus is applied in an in-vehicle terminal. The apparatus includes: a determining module configured to determine, in response to a parking space selection operation, a target parking space in a parking interface; a displaying module configured to display a floating graphical interface element in a display region corresponding to the target parking space; an adjusting module configured to adjust, in response to an adjustment operation for the floating graphical interface element, the floating graphical interface element by using a predetermined animation effect mode; and a stopping module configured to stop, when a predetermined stop condition is satisfied, adjusting the floating graphical interface element by using the predetermined animation effect mode.

Optionally, the adjusting module includes an adjusting sub-module configured to adjust, in response to a plurality of adjustment operations triggered continuously for the floating graphical interface element, the floating graphical interface element by using a plurality of animation effect modes sequentially. Each of the plurality of adjustment operations triggered continuously corresponds to a single animation effect mode. The plurality of animation effect modes forms a continuous animation effect with a unique changing trend.

Optionally, the adjusting sub-module includes: a first playing unit configured to play, in response to the adjustment operation for the floating graphical interface element, the floating graphical interface element in accordance with an animation effect mode corresponding to the adjustment operation to adjust the floating graphical interface element, and display the adjusted floating graphical interface element; a second playing unit configured to play, in response to a next adjustment operation for the floating graphical interface element, the floating graphical interface element in accordance with an animation effect mode corresponding to the next adjustment operation for predetermined time after the floating graphical interface element is played in accordance with the animation effect mode corresponding to the adjustment operation to adjust the floating graphical interface element, and display the adjusted floating graphical interface element; and a third playing unit configured to repeat said playing, in response to the next adjustment operation for the floating graphical interface element, the floating graphical interface element in accordance with the animation effect mode corresponding to the next adjustment operation for the predetermined time after the floating graphical interface element is played in accordance with the animation effect mode corresponding to the adjustment operation to adjust the floating graphical interface element, and display the adjusted floating graphical interface element, until a number of adjustments for the floating graphical interface element reaches a predetermined number.

Optionally, the adjusting sub-module further includes a rewinding unit, configured to rewind, in response to receiving no next adjustment operation for the floating graphical interface element for the predetermined time after the floating graphical interface element is played in accordance with the animation effect mode corresponding to the adjustment operation, a current floating graphical interface element in accordance with the animation effect mode played previously, until the floating graphical interface element is restored to an initial mode.

Optionally, the adjusting sub-module further includes a fourth playing unit configured to, when the adjustment operation for the floating graphical interface element is received during the rewinding of the current floating graphical interface element in accordance with the animation effect mode played previously, play, after the floating graphical interface element is restored to the initial mode, the floating graphical interface element in accordance with an animation effect mode corresponding to the adjustment operation in response to the adjustment operation for the floating graphical interface element, to adjust the floating graphical interface element, and display the adjusted floating graphical interface element.

Optionally, the adjusting sub-module further includes a fifth playing unit configured to play, in response to the number of adjustments for the floating graphical interface element reaching the predetermined number, the floating graphical interface element in an animation effect mode that causes the floating graphical interface element to disappear, and display a new floating graphical interface element after completing playing of the animation effect mode that causes the floating graphical interface element to disappear.

Optionally, the stopping module includes a stopping sub-module configured to stop, when the vehicle resumes driving or the user changes the target parking space, adjusting the floating graphical interface element by using the predetermined animation effect mode.

An embodiment of the present disclosure further discloses a vehicle. The vehicle includes a processor, a memory, and a computer program stored on the memory and executable on the processor. The computer program, when executed by the processor, performs steps of the parking interaction method according to any of the embodiments of the present disclosure.

An embodiment of the present disclosure further discloses a computer-readable storage medium. The computer-readable storage medium stores a computer program. The computer program, when executed by a processor, performs steps of the parking interaction method according to any of the embodiments of the present disclosure.

An embodiment of the present disclosure includes the following advantages.

In an embodiment of the present disclosure, in response to a parking space selection operation, a target parking space is determined in a parking interface. Correspondingly, a floating graphical interface element is displayed in a display region corresponding to the target parking space. In response to an adjustment operation for the floating graphical interface element, the floating graphical interface element is adjusted by using a predetermined animation effect mode. This adjustment process is stopped when a stop condition is satisfied. In a process of selecting a parking space during parking, by setting an adjustment process of the floating graphical interface element, feedback on selections of the parking space is given to a user. Consequently, on the one hand, the user can clearly understand a role of such a function, and an expectation of the user on the function can be changed, thereby establishing a new user habit. Through the visual feedback, the user is told that parking is not started after the parking space is selected, and a parking process cannot be entered, thereby guiding the user to search for a function button corresponding to starting parking. On the other hand, through the adjustment of the floating graphical interface element, a human-computer interaction can be achieved, thereby increasing the fun during a parking space selection. In an embodiment of the present disclosure, the floating graphical interface element may also be played in a variety of animation effect modes to further add fun to the user.

The above description is only a summary of the technical solutions of the present disclosure, and can be implemented in accordance with the content of the description to facilitate a clear understanding of the technical means of the present disclosure. In addition, in order to make the above and other objects, features and advantages of the present disclosure more obvious and understandable, specific implementations of the present disclosure are exemplified below.

### BRIEF DESCRIPTION OF DRAWINGS

In order to clearly explain technical solutions of embodiments of the present disclosure or in the related art, drawings used in the description of the embodiments or the related art are briefly described below. Obviously, the drawings as described below are merely some embodiments of the present disclosure. Based on these drawings, other drawings may be obtained by those skilled in the art without creative effort.
FIG. 1 is a flowchart illustrating steps of an embodiment of a parking interaction method of the present disclosure;
FIG. 2 is a flowchart illustrating steps of an embodiment of another parking interaction method of the present disclosure;
FIG. 3A is a schematic diagram showing a floating graphical interface element in a display region corresponding to a target parking space;
FIG. 3B is a schematic diagram showing an enlarged floating graphical interface element;
FIG. 3C is a schematic diagram showing a further enlarged floating graphical interface element;
FIG. 4A is a schematic diagram showing that a floating graphical interface element is played in an animation effect mode that causes the floating graphical interface element to disappear;
FIG. 4B is a schematic diagram showing that a new floating graphical interface element is displayed;
FIG. 4C is a schematic diagram showing a gradual formation of a new floating graphical interface element;
FIG. 5 is a flowchart illustrating a parking interaction of the present disclosure; and
FIG. 6 is a block diagram showing a structure of an embodiment of a parking interaction apparatus of the present disclosure.

### DESCRIPTION OF EMBODIMENTS

In order to make the above objects, features and advantages of the present disclosure more obvious and understandable, the present disclosure will be further described in detail below in conjunction with the accompanying drawings and specific embodiments. Obviously, embodiments described here are only part of embodiments of the present disclosure and are not all embodiments of the present disclosure. Based on the embodiments of the present disclosure, other embodiments obtained by those skilled in the art are within scope of the present disclosure.

During parking, when a user clicks to select a parking space, an expected effect is to start parking. However, if parking starts immediately upon clicking, there is a great safety hazard, and misuse of the user is likely to be generated. Such a design is generally not adopted when an automatic parking function is designed, which results in a parking system not giving corresponding feedback after the user chooses the parking space. The user may be confused by the functional utility of this operation, resulting in a reduced user experience.

Based on this, the present disclosure aims to provide a parking interaction method and a corresponding parking interaction apparatus, capable of overcoming the above problems or at least partially solving the above problems.

One of the core concepts of the embodiments of the present disclosure is as follows.

In a process of selecting a parking space during parking, by setting an adjustment process of a floating graphical interface element, feedback on selections of a parking space can be given to the user. Consequently, on the one hand, the user can clearly understand a role of such a function, and an expectation of the user on the function can be changed, thereby establishing a new user habit. Through the visual feedback, the user is told that parking is not started after the parking space is selected, and a parking process cannot be entered, thereby guiding the user to search for a function button corresponding to starting parking. On the other hand, through the adjustment of the floating graphical interface element, a human-computer interaction is realized, thereby increasing the fun during a parking space selection. In an embodiment of the present disclosure, the floating graphical interface element may also be played in a variety of animation effect modes to further add fun to the user.

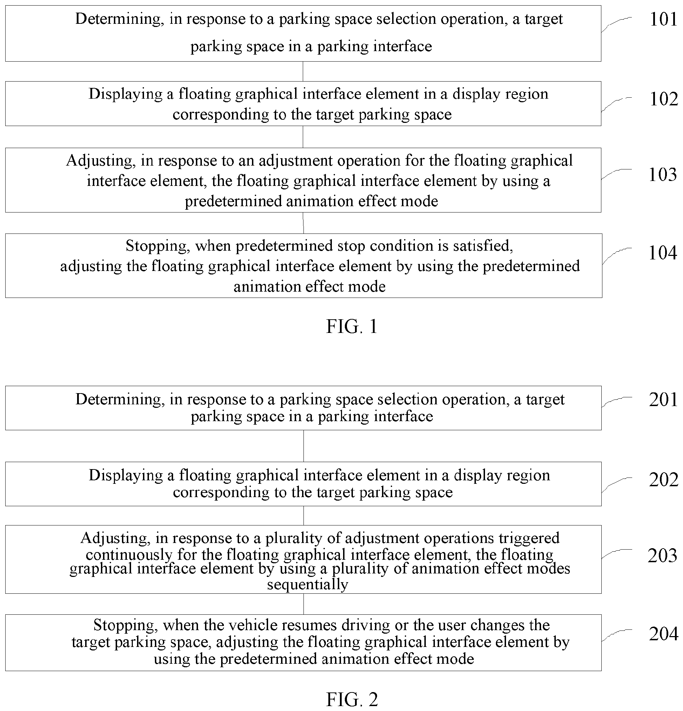

FIG. 1 is a flowchart illustrating steps of an embodiment of a parking interaction method of the present disclosure. Referring to FIG. 1, the method can be applied in an in-vehicle terminal. Specifically, the method may include the following steps.

In step 101, a target parking space is determined in a parking interface in response to a parking space selection operation.

During parking, the user may select the target parking space on the in-vehicle terminal. Specifically, a manner of selecting the parking space is not specifically limited. The user may select a parking space by clicking on an interface of the in-vehicle terminal, or by operating a steering wheel, or by voice.

In step 102, a floating graphical interface element is displayed in a display region corresponding to the target parking space.

After the target parking space is selected, a set floating graphical interface element is displayed in the display region corresponding to the target parking space. The user may be notified that the parking space has been selected by displaying the floating graphical interface element.

Exemplarily, modes of the floating graphical interface element may be displayed differently in different periods according to different promotion themes, such as birthday, Christmas, etc. By changing modes of different floating graphical interface elements, the user may be attracted to use a parking function. When the user gets used to and understands this function, the user may look forward to surprises at festival times, thereby increasing the frequency and dependence of using this function.

Exemplarily, a brand logo or some brand elements may also be appropriately integrated in combination with the brand of the user's vehicle.

In step 103, the floating graphical interface element is adjusted, in response to an adjustment operation for the floating graphical interface element, by using a predetermined animation effect mode.

The floating graphical interface element may be adjusted by using the predetermined animation effect mode. Here, the animation effect mode may be composed of one or more of basic animation effect modes mentioned below.

Displacement and speed: displacement refers to a distance of an object from one position to another. An interface element produces a dynamic effect through changes in displacement. Speed is a variable that is inseparable from displacement. With the same displacement and different speeds, an element may present different dynamic effects (e.g., uniform speed, acceleration, deceleration, and ease in and out, etc.). Changes in speed may increase a sense of movement and make it easier to attract attention.

Zoom in and zoom out: a process of zooming in or zooming out the interface element proportionally.

Disappearance and appearance: a process of the interface element emerging out of noting or developing from appearance to disappearance.

Flip: flip may be a 180-degree rotation of the interface element showing a 3D effect, or a 90-degree folding effect of the interface element.

Rotation: rotation may be the rotation of the interface element on a plane around a center point, or the rotation of all elements on the entire interface, e.g., switching between horizontal and vertical screens of a mobile device.

Deformation: a shape change of the interface element triggered by an operation or spontaneously designed.

By adjusting the floating graphical interface element with the predetermined animation effect mode, the parking interface is endowed with more vitality, and even comes with a personality, and thus is no longer a mechanical and rigid interface.

In step 104, it is stopped adjusting the floating graphical interface element by using the predetermined animation effect mode when a predetermined stop condition is satisfied.

It is stopped adjusting the floating graphical interface element by using the predetermined animation effect mode in response to the predetermined stop condition being satisfied. The interaction process stops under certain conditions to avoid affecting other necessary operations.

To sum up, in an embodiment of the present disclosure, by setting the adjustment process of the floating graphical interface element, feedback on selections of the parking space can be given to the user. Consequently, on the one hand, the user can clearly understand the role of such a function, and the expectation of the user on the function can be changed, thereby establishing a new user habit. Through the visual feedback, the user is told that parking is not started after the parking space is selected, and the parking process cannot be entered, thereby guiding the user to search for the function button corresponding to starting parking. On the other hand, through the adjustment of the floating graphical interface element, the human-computer interaction is realized, thereby increasing the fun during the parking space selection. In an embodiment of the present disclosure, the floating graphical interface element may also be played in a variety of animation effect modes. In addition, the modes of the floating graphical interface element may be changed in accordance with various promotion themes to bring surprises to the user.

FIG. 2 is a flowchart illustrating steps of an embodiment of another parking interaction method of the present disclosure. The method can be applied in the in-vehicle terminal. Specifically, referring to FIG. 2, the method may include the following steps.

In step 201, a target parking space is determined in a parking interface in response to a parking space selection operation.

In step 202, a floating graphical interface element is displayed in a display region corresponding to the target parking space.

In step 203, the floating graphical interface element is adjusted, in response to a plurality of adjustment operations triggered continuously for the floating graphical interface element, by using a plurality of animation effect modes sequentially. Each of the plurality of adjustment operations triggered continuously corresponds to a single animation effect mode. The plurality of animation effect modes forms a continuous animation effect with a unique changing trend.

The user may perform one or more times of adjustment operations on the floating graphic interface element. When the user performs a plurality of adjustments on the floating graphic interface element continuously, each of the plurality of adjustment operations triggered continuously corresponds to a single animation effect mode. The plurality of animation effect modes forms a continuous animation effect with a unique changing trend.

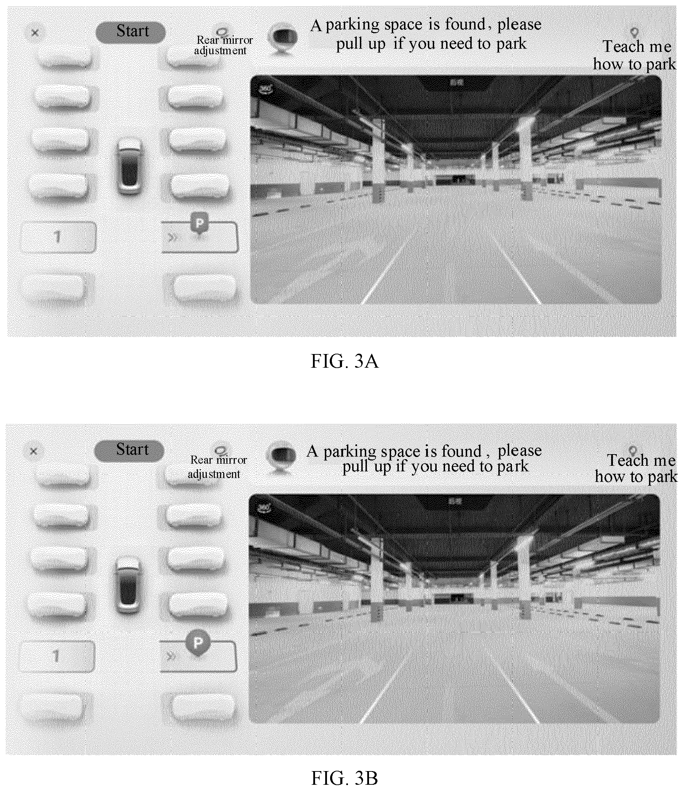

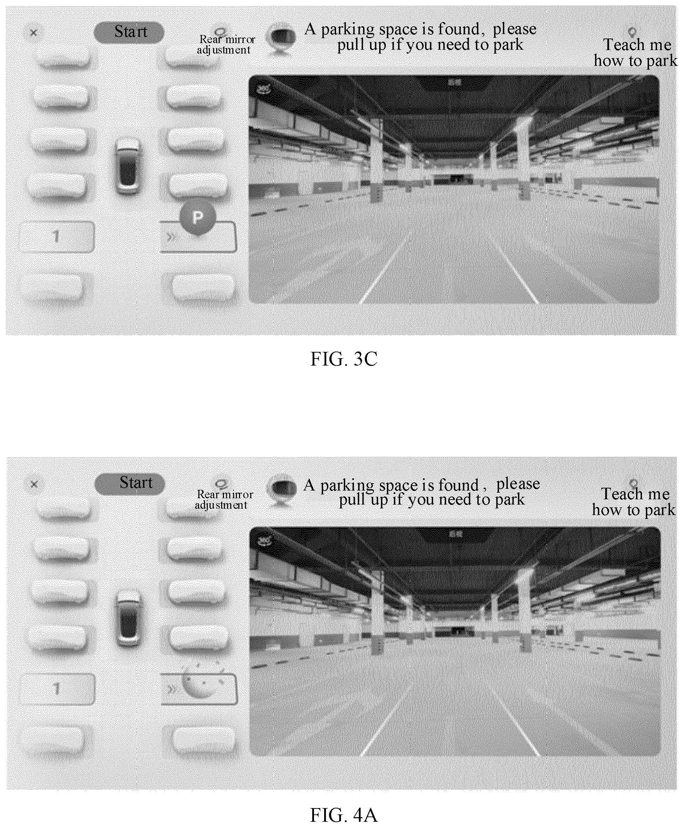

FIG. 3A to FIG. 3C are schematic diagrams showing a floating graphical interface element in a display region corresponding to a target parking space. As illustrated in FIG. 3A, when the user triggers the adjustment operation for the first time, the floating graphical interface element in the display region corresponding to the target parking space is represented by a buoy ^{┌}P_{┘}. As illustrated in FIG. 3B, when the user triggers an adjustment for another time, the buoy ^{┌}P_{┘} zooms in according to a separate zooming animation effect mode. As illustrated in FIG. 3C, when the user triggers the adjustment for yet another time, the buoy ^{┌}P_{┘} zooms in again according to the separate zooming animation effect mode.

Step 203 may also include the following sub-steps.

In sub-step S11, the floating graphical interface element is played, in response to the adjustment operation for the floating graphical interface element, in accordance with an animation effect mode corresponding to the adjustment operation to adjust the floating graphical interface element, and the adjusted floating graphical interface element is displayed.

That is, a dynamic change process of the floating graphic interface element before and after an adjustment may be displayed on the in-vehicle terminal. The dynamic change process is completed based on an animation effect mode corresponding to the adjustment. After the adjustment, the final floating graphic interface element played in the animation effect mode corresponding to the adjustment is displayed.

In sub-step S12, the floating graphical interface element is played, in response to a next adjustment operation for the floating graphical interface element, in accordance with an animation effect mode corresponding to the next adjustment operation for predetermined time after the floating graphical interface element is played in accordance with the animation effect mode corresponding to the adjustment operation to adjust the floating graphical interface element, and the adjusted floating graphical interface element is displayed.

The predetermined time refers to that when the user continues initiating a next adjustment operation for the floating graphic interface element after the floating graphic interface element is played in accordance with the animation effect mode corresponding to the adjustment operation, a period from an end of playing the floating graphic interface element to the time the user initiates the adjustment operation again may be set to a fixed value.

When the user initiates the next adjustment operation for the predetermined time, the floating graphical interface element may be played in accordance with the animation effect mode corresponding to the adjustment operation, and the adjusted floating graphical interface element may be displayed.

Exemplarily, the predetermined time may be 1s. The user has initiated an adjustment operation on the floating graphical interface element previously. The floating graphical interface element has changed from a first state to a second state. Currently, 0.75s has passed since the floating graphical interface element has changed to the second state, and the user initiates an adjustment operation for the floating graphical interface element again. Since 0.75s is within a range of the predetermined time, the floating graphical interface element continues changing from the second state to a third state.

In sub-step S13, playing, in response to the next adjustment operation for the floating graphical interface element, the floating graphical interface element in accordance with the animation effect mode corresponding to the next adjustment operation for the predetermined time after the floating graphical interface element is played in accordance with the animation effect mode corresponding to the adjustment operation to adjust the floating graphical interface element, and displaying the adjusted floating graphical interface element are repeated, until a number of adjustments for the floating graphical interface element reaches a predetermined number.

The above sub-step S12 may be repeated until the number of adjustments reaches the predetermined number. The predetermined number refers to a maximum number of adjustments performed by the user continuously on the floating graphical interface element.

Performing the adjustment by the user by using the plurality of animation effect modes sequentially in response to the plurality of adjustment operations triggered continuously for the floating graphical interface element may further include the following sub-steps.

In sub-step Sill, a current floating graphical interface element is rewound, in response to receiving no next adjustment operation for the floating graphical interface element for the predetermined time after the floating graphical interface element is played in accordance with the animation effect mode corresponding to the adjustment operation, in accordance with the animation effect mode played previously, until the floating graphical interface element is restored to an initial mode.

Exemplarily, the predetermined time may be 1s. The user has initiated an adjustment operation on the floating graphical interface element previously. The floating graphical interface element has changed from the first state to the second state. Currently, Is has passed since the floating graphical interface element has changed to the second state. If the user has not initiated the adjustment operation for the floating graphical interface element yet, the floating graphical interface element may be re-transformed from the second state to the original first state, and the floating graphical interface element may be rewound according to the previously played animation effect mode.

In sub-step S 112, when the adjustment operation for the floating graphical interface element is received during the rewinding of the current floating graphical interface element in accordance with the animation effect mode played previously, the floating graphical interface element is played, after the floating graphical interface element is restored to the initial mode, in accordance with an animation effect mode corresponding to the adjustment operation in response to the adjustment operation for the floating graphical interface element, to adjust the floating graphical interface element, and the adjusted floating graphical interface element is displayed.

During rewinding, if the user receives the adjustment operation for the floating graphical interface element, the floating graphical interface element may be adjusted, after being restored to the initial mode, in accordance with the animation effect mode corresponding to the adjustment operation.

Performing the adjustment by the user by using the plurality of animation effect modes sequentially in response to the plurality of adjustment operations triggered continuously for the floating graphical interface element may further include the following sub-step.

In sub-step S211, the floating graphical interface element is played, in response to the number of adjustments for the floating graphical interface element reaching the predetermined number, in an animation effect mode that causes the floating graphical interface element to disappear, and a new floating graphical interface element is displayed after completing playing of the animation effect mode that causes the floating graphical interface element to disappear.

When the number of adjustments for the floating graphical interface element reaches the predetermined number, the floating graphical interface element may be played in the animation effect mode that causes the floating graphical interface element to disappear, and the new floating graphical interface element may be displayed after completing the playing.

FIG. 4A is a schematic diagram showing that a floating graphical interface element is played in an animation effect mode that causes the floating graphical interface element to disappear. Referring to FIG. 4A, the animation effect mode that causes the floating graphical interface element to disappear may be an explosive animation effect mode, and the buoy ^{┌}P_{┘} may explode and sets off fireworks.

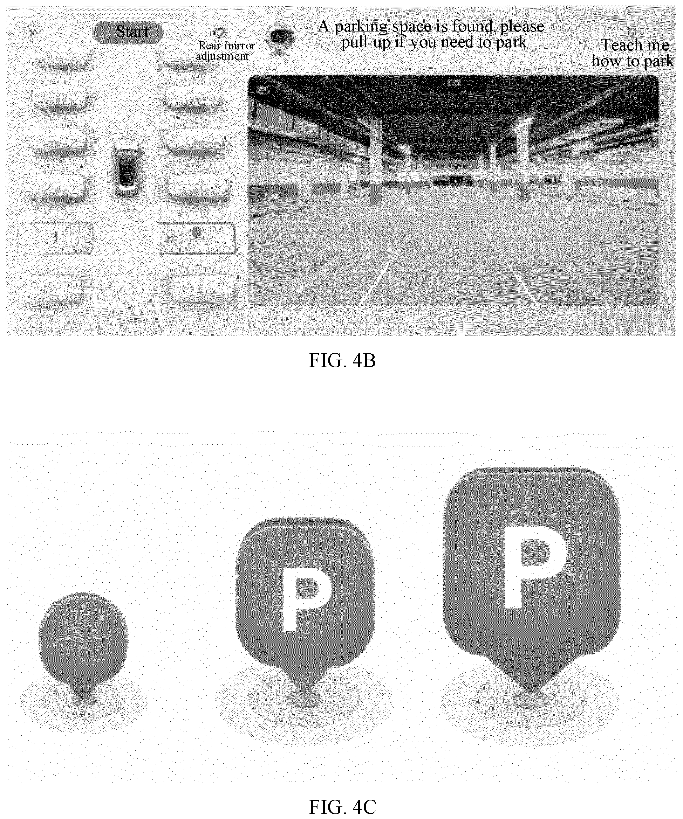

FIG. 4B is a schematic diagram showing that a new floating graphical interface element is displayed. Referring to FIG. 4B, when the buoy ^{┌}P_{┘} may explode and set off fireworks, a firework hits the ground and gradually forms a new buoy ^{┌}P_{┘}. FIG. 4C is a schematic diagram showing a gradual formation of a new floating graphical interface element, in which a firework gradually grows larger to form a new buoy ^{┌}P_{┘}.

In step 204, it is stopped adjusting the floating graphical interface element by using the predetermined animation effect mode when the vehicle resumes driving or the user changes the target parking space.

When the vehicle resumes driving or the user changes the target parking space, the above adjustment process may be stopped in order not to affect driving of the user or continuing a parking operation.

In order to enable those skilled in the art to better understand step 201 to step 204 in the embodiments of the present disclosure, description is made below with an example.

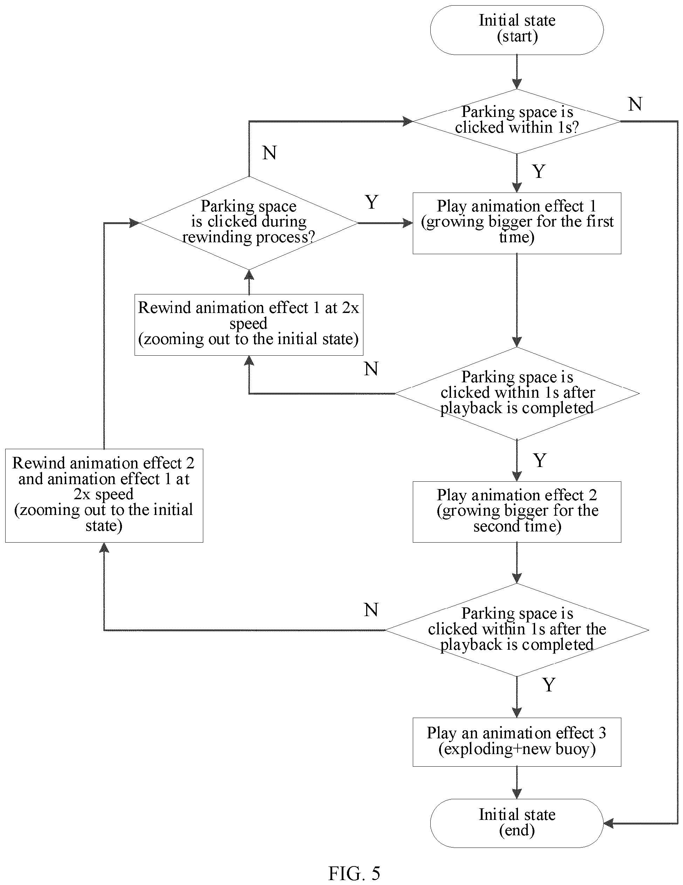

FIG. 5 is a flowchart illustrating a parking interaction according to an embodiment of the present disclosure. Referring to FIG. 5, the flowchart may include the following steps.
1. After the user selects a parking space, a buoy ^{┌}P_{┘} may appear in the parking space.
2. It is determined whether the user clicks on the parking space within Is. If so, a corresponding animation effect 1 may be played. After playing of the animation effect 1 is completed, a final static effect of the buoy may be displayed. Clicking during dynamic playing may be considered invalid and may not directly trigger an animation effect 2. Each click may also come with a set click sound effect. If not, the process ends.
3. After playing of the animation effect 1 is completed, it is determined whether the user clicks on the parking space within Is. If so, the corresponding animation effect may be played. After playing of the animation effect 2 is completed, the final static effect of the buoy may be displayed. Clicking during the dynamic playing may be considered invalid and may not directly trigger an animation effect 3. Each click may also come with the set click sound effect. If not, the animation effect 1 may be rewound at 2x speed, and it may be determined whether the user clicks on the parking space during a rewinding process. If yes, the animation effect 1 may be played automatically after rewinding to an initial state.
4. After the playing of the animation effect 2 is completed, it is determined whether the user clicks on the parking space within Is. If so, the corresponding animation effect 3 may be played. After playing of the animation effect 3 is completed, the initial state may be restored. Clicking during the dynamic playing may be considered invalid. Each click may also come with the set click sound effect. If not, the animation effect 2 and the animation effect 1 may be rewound at 2x speed, and it may be determined whether the user clicks on the parking space during the rewinding process. If yes, the animation effect 1 may be played automatically after rewinding to the initial state.

In summary, in an embodiment of the present disclosure, by setting the adjustment process of the floating graphical interface element, feedback on selections of the parking space can be given to the user. Consequently, on the one hand, the user can clearly understand the role of such a function, and the expectation of the user on the function can be changed, thereby establishing the new user habit. Through the visual feedback, the user is told that parking is not started after the parking space is selected, and the parking process cannot be entered, thereby guiding the user to search for the function button corresponding to starting parking. On the other hand, through the adjustment of the floating graphical interface element, the human-computer interaction is realized, thereby increasing the fun during the parking space selection. In an embodiment of the present disclosure, the floating graphical interface element may also be played in a variety of animation effect modes to further add fun to the user.

It should be noted that, in order to simplify description of the present disclosure, method embodiments of the present disclosure are expressed as a series of action combinations, but it would be appreciated by those skilled in the art that the embodiments of the present disclosure are not limited to the order of the actions, for the reason that according to embodiments of the present disclosure, some steps may be executed in other orders or be executed at the same time. In addition, it would be further appreciated by those skilled in the art that embodiments described in the specification are preferred embodiments, and actions involved therein may not be necessary for the embodiments of the present disclosure.

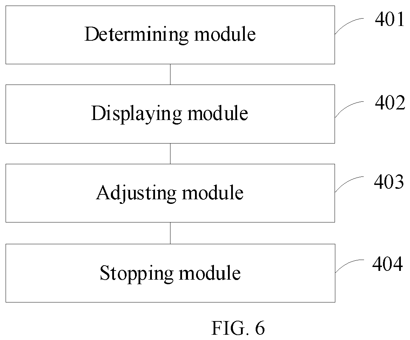

FIG. 6 is a block diagram showing a structure of an embodiment of a parking interaction apparatus of the present disclosure. The apparatus may be applied in the in-vehicle terminal. Specifically, referring to FIG. 6, the apparatus may include the following modules.

A determining module 401 is configured to determine, in response to a parking space selection operation, a target parking space in a parking interface.

A displaying module 402 is configured to display a floating graphical interface element in a display region corresponding to the target parking space.

An adjusting module 403 is configured to adjust, in response to an adjustment operation for the floating graphical interface element, the floating graphical interface element by using a predetermined animation effect mode.

A stopping module 404 is configured to stop, when a predetermined stop condition is satisfied, adjusting the floating graphical interface element by using the predetermined animation effect mode.

In an embodiment of the present disclosure, the adjusting module includes an adjusting sub-module. The adjusting sub-module is configured to adjust, in response to a plurality of adjustment operations triggered continuously for the floating graphical interface element, the floating graphical interface element by using a plurality of animation effect modes sequentially. Each of the plurality of adjustment operations triggered continuously corresponds to a single animation effect mode. The plurality of animation effect modes forms a continuous animation effect with a unique changing trend.

In an embodiment of the present disclosure, the adjusting sub-module includes a first playing unit, a second playing unit, and a third playing unit. The first playing unit is configured to play, in response to the adjustment operation for the floating graphical interface element, the floating graphical interface element in accordance with an animation effect mode corresponding to the adjustment operation to adjust the floating graphical interface element, and display the adjusted floating graphical interface element. The second playing unit is configured to play, in response to a next adjustment operation for the floating graphical interface element, the floating graphical interface element in accordance with an animation effect mode corresponding to the next adjustment operation for predetermined time after the floating graphical interface element is played in accordance with the animation effect mode corresponding to the adjustment operation to adjust the floating graphical interface element, and display the adjusted floating graphical interface element. The third playing unit is configured to repeat said playing, in response to the next adjustment operation for the floating graphical interface element, the floating graphical interface element in accordance with the animation effect mode corresponding to the next adjustment operation for the predetermined time after the floating graphical interface element is played in accordance with the animation effect mode corresponding to the adjustment operation to adjust the floating graphical interface element, and display the adjusted floating graphical interface element, until a number of adjustments for the floating graphical interface element reaches a predetermined number.

In an embodiment of the present disclosure, the adjusting sub-module further includes a rewinding unit. The rewinding unit is configured to rewind, in response to receiving no next adjustment operation for the floating graphical interface element for the predetermined time after the floating graphical interface element is played in accordance with the animation effect mode corresponding to the adjustment operation, a current floating graphical interface element in accordance with the animation effect mode played previously, until the floating graphical interface element is restored to an initial mode.

In an embodiment of the present disclosure, the adjusting sub-module further includes a fourth playing unit. The fourth playing unit is configured to, when the adjustment operation for the floating graphical interface element is received during the rewinding of the current floating graphical interface element in accordance with the animation effect mode played previously, play, after the floating graphical interface element is restored to the initial mode, the floating graphical interface element in accordance with an animation effect mode corresponding to the adjustment operation in response to the adjustment operation for the floating graphical interface element, to adjust the floating graphical interface element, and display the adjusted floating graphical interface element.

In an embodiment of the present disclosure, the adjusting sub-module further includes a fifth playing unit. The fifth playing unit is configured to play, in response to the number of adjustments for the floating graphical interface element reaching the predetermined number, the floating graphical interface element in an animation effect mode that causes the floating graphical interface element to disappear, and display a new floating graphical interface element after completing playing of the animation effect mode that causes the floating graphical interface element to disappear.

In an embodiment of the present disclosure, the stopping module includes a stop sub-module. The stop sub-module is configured to stop, when the vehicle resumes driving or the user changes the target parking space, adjusting the floating graphical interface element by using the predetermined animation effect mode.

In summary, in an embodiment of the present disclosure, by setting the adjustment process of the floating graphical interface element, feedback on selections of the parking space can be given to the user. Consequently, on the one hand, the user can clearly understand the role of such a function, and the expectation of the user on the function can be changed, thereby establishing the new user habit. Through the visual feedback, the user is told that parking is not started after the parking space is selected, and the parking process cannot be entered, thereby guiding the user to search for the function button corresponding to starting parking. On the other hand, through the adjustment of the floating graphical interface element, the human-computer interaction is realized, thereby increasing the fun during the parking space selection. In an embodiment of the present disclosure, the floating graphical interface element may also be played in a variety of animation effect modes to further add fun to the user.

Since the apparatus embodiments are basically similar to the method embodiments, the description of the apparatus embodiments is relatively simple. For related description, reference may be made to a corresponding part of the description of the method embodiments.

An embodiment of the present disclosure further discloses a vehicle. The vehicle includes a processor, a memory, and a computer program stored on the memory and executable on the processor. The computer program, when executed by the processor, performs each process of embodiments of the parking interaction method, and can achieve the same technical effect. To avoid repetition, details thereof will be omitted here.

An embodiment of the present disclosure further discloses a computer-readable storage medium. The computer-readable storage medium stores a computer program. The computer program, when executed by a processor, performs each process of embodiments of the parking interaction method, and can achieve the same technical effect. To avoid repetition, details thereof will be omitted here.

Each embodiment in the specification is described in a progressive manner. Each embodiment focuses on differences from other embodiments. The same or similar parts of various embodiments can be referred to each other.

Those skilled in the art should understand that the embodiments of the present disclosure may be provided as a method, an apparatus, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including but not limited to disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams may be realized by computer program instructions. These computer program instructions may be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions may also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure have been described, those skilled in the art may make additional changes and modifications to these embodiments once they learn the basic creative concept. Therefore, the attached claims are intended to be interpreted as including the preferred embodiments and all changes and modifications falling within the scope of the embodiments of the present disclosure.

Further, It should be noted that relational terms herein, such as "first" and "second", are used only for differentiating one entity or operation from another entity or operation, which, however do not necessarily require or imply that there should be any real relationship or sequence between the entities or operations. Also, terms "comprise", "include" or any other variations thereof are meant to cover non-exclusive including, such that the process, method, article or terminal device including a series of elements do not only include those elements, but also include other elements that are not explicitly listed, or also include inherent elements of the process, method, article or terminal device. In a case that there are no more restrictions, an element qualified by the statement "comprises a ..." does not exclude the presence of additional identical elements in the process, method, article or terminal device that includes the said element.

The above provides detailed description of the parking interaction method and parking interaction apparatus provided by the embodiments of the present disclosure. Specific examples are used herein to illustrate the principles and implementations of the present disclosure. The description of the above embodiments is only used to facilitate understanding of the method and a core idea thereof of the present disclosure. In addition, for those skilled in the art, according to the concept of the present disclosure, changes can be made to the specific implementations and the scope of application. In summary, the content of the specification should not be construed as a limitation to the present disclosure.

## Claims

1. A parking interaction method, applied in an in-vehicle terminal, the method comprising:
determining, in response to a parking space selection operation, a target parking space in a parking interface;
displaying a floating graphical interface element in a display region corresponding to the target parking space;
adjusting, in response to an adjustment operation for the floating graphical interface element, the floating graphical interface element by using a predetermined animation effect mode; and
stopping, when a predetermined stop condition is satisfied, said adjusting the floating graphical interface element by using the predetermined animation effect mode.

2. The method according to claim 1, wherein said adjusting, in response to the adjustment operation for the floating graphical interface element, the floating graphical interface element by using the predetermined animation effect mode comprises:
adjusting, in response to a plurality of adjustment operations triggered continuously for the floating graphical interface element, the floating graphical interface element by using a plurality of animation effect modes sequentially, wherein each of the plurality of adjustment operations triggered continuously corresponds to a single animation effect mode, and the plurality of animation effect modes forms a continuous animation effect with a unique changing trend.

3. The method according to claim 2, wherein said adjusting, in response to the plurality of adjustment operations triggered continuously for the floating graphical interface element, the floating graphical interface element by using the plurality of animation effect modes sequentially comprises:
playing, in response to the adjustment operation for the floating graphical interface element, the floating graphical interface element in accordance with an animation effect mode corresponding to the adjustment operation to adjust the floating graphical interface element, and displaying the adjusted floating graphical interface element;
playing, in response to a next adjustment operation for the floating graphical interface element, the floating graphical interface element in accordance with an animation effect mode corresponding to the next adjustment operation for predetermined time after the floating graphical interface element is played in accordance with the animation effect mode corresponding to the adjustment operation to adjust the floating graphical interface element, and displaying the adjusted floating graphical interface element; and
repeating said playing, in response to the next adjustment operation for the floating graphical interface element, the floating graphical interface element in accordance with the animation effect mode corresponding to the next adjustment operation for the predetermined time after the floating graphical interface element is played in accordance with the animation effect mode corresponding to the adjustment operation to adjust the floating graphical interface element, and said displaying the adjusted floating graphical interface element, until a number of adjustments for the floating graphical interface element reaches a predetermined number.

4. The method according to claim 3, wherein said adjusting, in response to the plurality of adjustment operations triggered continuously for the floating graphical interface element, the floating graphical interface element by using the plurality of animation effect modes sequentially further comprises:
rewinding, in response to receiving no next adjustment operation for the floating graphical interface element for the predetermined time after the floating graphical interface element is played in accordance with the animation effect mode corresponding to the adjustment operation, a current floating graphical interface element in accordance with the animation effect mode played previously, until the floating graphical interface element is restored to an initial mode.

5. The method according to claim 4, wherein said adjusting, in response to the plurality of adjustment operations triggered continuously for the floating graphical interface element, the floating graphical interface element by using the plurality of animation effect modes sequentially further comprises:
when the adjustment operation for the floating graphical interface element is received during the rewinding of the current floating graphical interface element in accordance with the animation effect mode played previously, playing, after the floating graphical interface element is restored to the initial mode, the floating graphical interface element in accordance with an animation effect mode corresponding to the adjustment operation in response to the adjustment operation for the floating graphical interface element, to adjust the floating graphical interface element, and displaying the adjusted floating graphical interface element.

6. The method according to claim 3, wherein said adjusting, in response to the plurality of adjustment operations triggered continuously for the floating graphical interface element, the floating graphical interface element by using the plurality of animation effect modes sequentially further comprises:
playing, in response to the number of adjustments for the floating graphical interface element reaching the predetermined number, the floating graphical interface element in an animation effect mode that causes the floating graphical interface element to disappear, and displaying a new floating graphical interface element after completing playing of the animation effect mode that causes the floating graphical interface element to disappear.

7. The method according to claim 3, wherein the predetermined stop condition comprises a vehicle resuming driving or a user changing the target parking space, and said stopping, when the predetermined stop condition is satisfied, adjusting the floating graphical interface element by using the predetermined animation effect mode comprises:
stopping, when the vehicle resumes driving or the user changes the target parking space, adjusting the floating graphical interface element by using the predetermined animation effect mode.

8. A parking interaction apparatus, applied in an in-vehicle terminal, the apparatus comprising:
a determining module configured to determine, in response to a parking space selection operation, a target parking space in a parking interface;
a displaying module configured to display a floating graphical interface element in a display region corresponding to the target parking space;
an adjusting module configured to adjust, in response to an adjustment operation for the floating graphical interface element, the floating graphical interface element by using a predetermined animation effect mode; and
a stopping module configured to stop, when a predetermined stop condition is satisfied, adjusting the floating graphical interface element by using the predetermined animation effect mode.

9. A vehicle, comprising a processor, a memory, and a computer program stored on the memory and executable on the processor, wherein the computer program, when executed by the processor, performs steps of the parking interaction method according to any one of claims 1 to 7.

10. A computer-readable storage medium having a computer program stored thereon, wherein the computer program, when executed by a processor, performs steps of the parking interaction method according to any one of claims 1 to 7.
